# EUROPEAN PATENT APPLICATION

(11) **EP 2 144 415 A2**
(43) Date of publication of application: **13.01.2010**
(21) Application number: 09171418.8
(22) Date of filing: 03.01.2003
(51) Int. Cl.: H04L 29/06

(54) **content-based caching and routing of content using subscription information**

(30) Priority: 11.01.2002 US 43918
(62) Divisional of application: 03703683.7
(71) Applicant: Intel Corporation, Santa Clara, CA 95052 (US)
(72) Inventor: Pendakur, Ramesh, Hillsboro, OR 97124 (US)
(74) Representative: Rummler, Felix

(57) **Abstract**

A system, apparatus, and method are provided for providing personalized content delivery using a content-based scheme based on user profiles comprising content subscription information. According to one embodiment of the present invention, a user may provide content subscription information via a corresponding network node. A user profile corresponding to the user may be generated using the content subscription information. The content based on the user profile may then be delivered to the user via the corresponding network node.

## Description

### COPYRIGHT NOTICE

Contained herein is material that is subject to copyright protection. The copyright owner has no objection to the facsimile reproduction of the patent disclosure by any person, as it appears in the Patent and Trademark Office patent files or records, but otherwise reserves all rights to the copyright whatsoever.

### FIELD OF THE INVENTION

This invention relates to content delivery, in general, and more specifically to delivering personalized content along network nodes using a content-based scheme.

### BACKGROUND OF THE INVENTION

The idea of delivering content is nothing new. Many attempts have been made to personalize content delivery by providing users access to content of their choice and needs. Typically, users have access to various databases, such as news articles, sports statistics, and stock quotes. The users may access such information in plain text format and/or access the information by playing audio and/or video clips. Further, the users have the option of subscribing to databases from content providers, or downloading such databases on their own devices, such as computers and handheld devices.

The broadcast content-delivery methods and apparatus available today are address-based, and therefore, rely on end-user devices, such as set-top boxes to actively access the available information, and sort out the relevant information. Such method and apparatus are very inefficient, because, they require information to be available even when not needed, and therefore waste bandwidth. Further, the users are required to choose from a practically unlimited supply of unstructured information, and repeat the process every time the users' interests change.

Further, due to the address-based nature of today's content-delivery methods and apparatus, they merely compress and bundle the information files without much-needed categorization of information. Lack of categorization is one reason why content-delivery cannot be personalized. Further, the lack of categorization makes it extremely difficult and inefficient for users or administrators to search the content. Hence, with today's increasing demand for information, the address-based content delivery methods and apparatus are uneconomical and inefficient.

### BRIEF DESCRIPTION OF THE DRAWINGS

The appended claims set forth the features of the invention with particularity. The invention, together with its advantages, may be best understood from the following detailed description taken in conjunction with the accompanying drawings of which:
Figure 1 is a block diagram of a typical computer system upon which one embodiment of the present invention may be implemented;
Figure 2 is a block diagram illustrating an exemplary hierarchical content distribution network in which the present invention may be implemented;
Figure 3 is a block diagram conceptually illustrating an overview of delivering content from a content delivery system to a content receiving system, according to one embodiment of the present invention;
Figure 4 is a flow diagram conceptually illustrating content delivery, according to one embodiment of the present invention;
Figure 5 is a block diagram conceptually illustrating content delivery in a hierarchy of network nodes using a content-based caching and forwarding scheme, according to one embodiment of the present invention;
Figure 6 is a flow diagram conceptually illustrating content delivery processing, according to one embodiment of the present invention;
Figure 7 is a block diagram conceptually illustrating a cable television network using content-based scheme for content delivery, according to one embodiment of the present invention.

### DETAILED DESCRIPTION

A method and apparatus are described for delivering content throughout a hierarchy of network nodes using a content-based caching and routing scheme, which relies upon subscription information from downstream nodes. Broadly stated, embodiments of the present invention allow scheduling and distribution of personalized content by generating and distributing a content-based bit stream appropriate for the particular sub-tree of the distribution network.

A system, apparatus, and method are provided for providing personalized content delivery using a content-based scheme based on user profiles comprising content subscription information. According to one embodiment of the present invention, a user may provide content subscription information via a corresponding network node. A user profile corresponding to the user may be generated using the content subscription information. The content based on the user profile may then be delivered to the user via the corresponding network node.

According to one embodiment, a metadata dictionary of content descriptors may be periodically provided to all the network nodes in the hierarchy for uniformity and consistency in (metadata) vocabulary. The content descriptors may be associated with content to generate descriptive content. The descriptive content may then be cached and routed according to user subscriptions.

According to one embodiment, a content bit stream based on aggregated subscription information may be generated and delivered to a hierarchy of network nodes. The content bit stream may then be filtered at various levels of the hierarchy to provide content to the users based on their corresponding content subscriptions, as identified by their user profiles, for example.

In the following description, for the purposes of explanation, numerous specific details are set forth in order to provide a thorough understanding of the present invention. It will be apparent, however, to one skilled in the art that the present invention may be practiced without some of these specific details. In other instances, well-known structures and devices are shown in block diagram form.

The present invention includes various steps, which will be described below. The steps of the present invention may be performed by hardware components or may be embodied in machine-executable instructions, which may be used to cause a general-purpose or special-purpose processor or logic circuits programmed with the instructions to perform the steps. Alternatively, the steps may be performed by a combination of hardware and software.

The present invention may be provided as a computer program product, which may include a machine-readable medium having stored thereon instructions, which may be used to program a computer (or other electronic devices) to perform a process according to the present invention. The machine-readable medium may include, but is not limited to, floppy diskettes, optical disks, CD-ROMs, and magneto-optical disks, ROMs, RAMs, EPROMs, EEPROMs, magnetic or optical cards, flash memory, or other type of media / machine-readable medium suitable for storing electronic instructions. Moreover, the present invention may also be downloaded as a computer program product, wherein the program may be transferred from a remote computer to a requesting computer by way of data signals embodied in a carrier wave or other propagation medium via a communication link (e.g., a modem or network connection).

Importantly, while embodiments of the present invention will be described with reference to viewers and streaming video, the apparatus and methods described herein are equally applicable to various other types of media and multimedia. For example, viewers and/or listeners may receive steaming audio and video, streaming audio, text, graphics, animation, data, and the like.

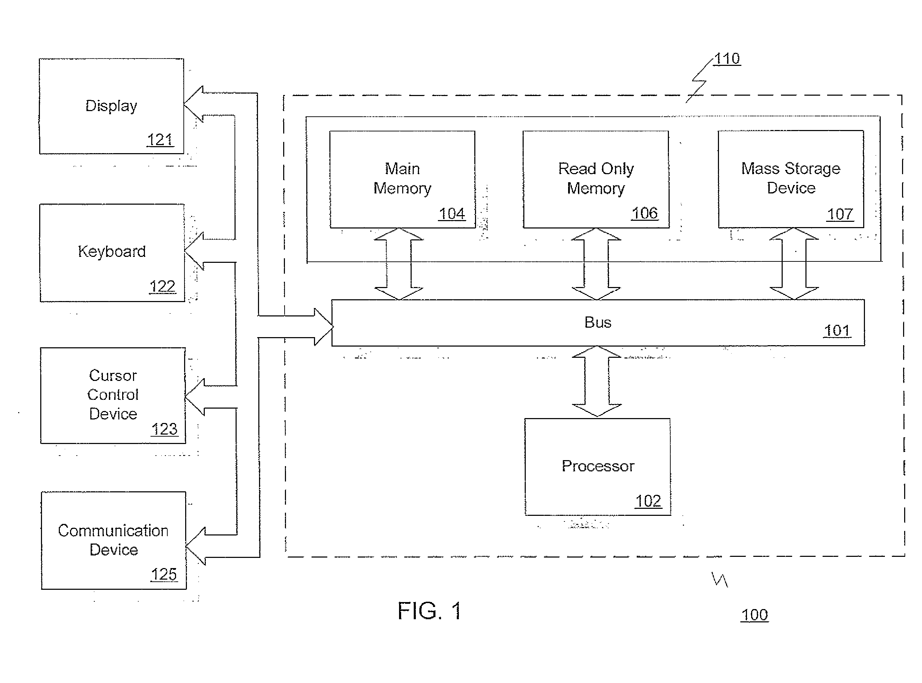

**Figure 1** is a block diagram of a typical computer system upon which one embodiment of the present invention may be implemented. Computer system 100 comprises a bus or other communication means 101 for communicating information, and a processing means such as processor 102 coupled with bus 101 for processing information. Computer system 100 further comprises a random access memory (RAM) or other dynamic storage device 104 (referred to as main memory), coupled to bus 101 for storing information, and instructions to be executed by processor 102. Main memory 104 also may be used for storing temporary variables or other intermediate information during execution of instructions by processor 102. Computer system 100 also comprises a read only memory (ROM) and/or other static storage device 106 coupled to bus 101 for storing static information and instructions for processor 102.

A data storage device 107 such as a magnetic disk or optical disc and its corresponding drive may also be coupled to computer system 100 for storing information and instructions. Computer system 100 can also be coupled via bus 101 to a display device 121, such as a cathode ray tube (CRT) or Liquid Crystal Display (LCD), for displaying information to an end user. Typically, an alphanumeric input device 122, including alphanumeric and other keys, may be coupled to bus 101 for communicating information and/or command selections to processor 102. Another type of user input device is cursor control 123, such as a mouse, a trackball, or cursor direction keys for communicating direction information and command selections to processor 102 and for controlling cursor movement on display 121.

A communication device 125 is also coupled to bus 101. The communication device 125 may include a modem, a network interface card, or other well-known interface devices, such as those used for coupling to Ethernet, token ring, or other types of physical attachment for purposes of providing a communication link to support a local or wide area network, for example. In this manner, the computer system 100 may be coupled to a number of clients and/or servers via a conventional network infrastructure, such as a company's Intranet and/or the Internet, for example.

It is appreciated that a lesser or more equipped computer system than the example described above may be desirable for certain implementations. Therefore, the configuration of computer system 100 will vary from implementation to implementation depending upon numerous factors, such as price constraints, performance requirements, technological improvements, and/or other circumstances.

It should be noted that, while the steps described herein may be performed under the control of a programmed processor, such as processor 102, in alternative embodiments, the steps may be fully or partially implemented by any programmable or hard-coded logic, such as Field Programmable Gate Arrays (FPGAs), TTL logic, or Application Specific Integrated Circuits (ASICs), for example. Additionally, the method of the present invention may be performed by any combination of programmed general-purpose computer components and/or custom hardware components. Therefore, nothing disclosed herein should be construed as limiting the present invention to a particular embodiment wherein the recited steps are performed by a specific combination of hardware components.

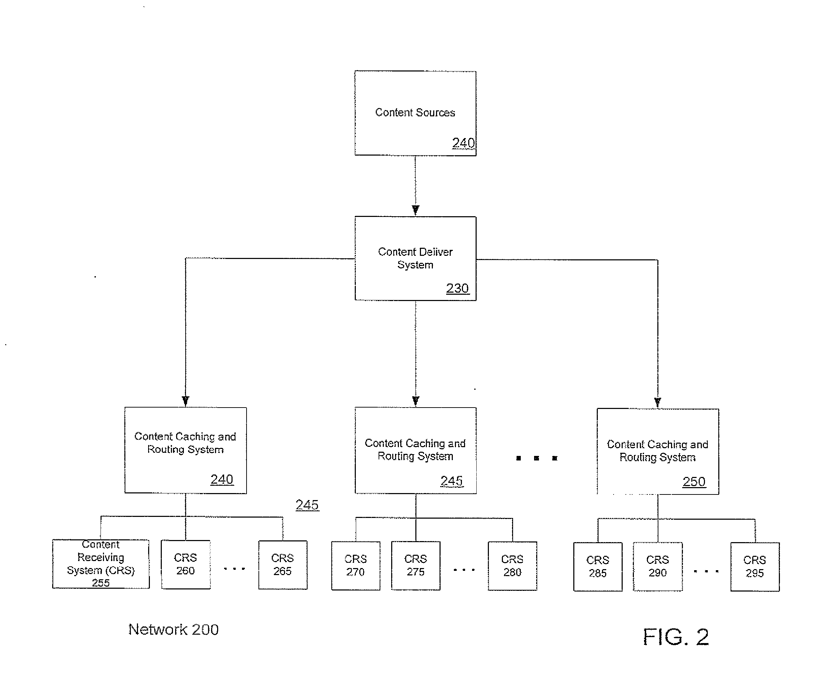

**Figure 2** is a block diagram conceptually illustrating an exemplary hierarchical content distribution network in which the present invention may be implemented. Many types of networks and protocols are available, and may be used. However, for illustrative purposes only, fiber optics may be used downstream up to content caching and routing systems 240-250, and then twisted pairs or coaxial cables may be used down to the content receiving systems 255-295.

Connected to this network 200 is are content sources 240, content delivery system 230 (delivery system), content caching and routing systems (caching and routing systems) 240-50, and content receiving systems (receiving system) 255-295. The number and arrangement of this equipment may vary depending on the application.

The content sources 240 may include the sources that provide the content to be delivered by the delivery system 230. The delivery system 230 may deliver content to other systems, subsystems, or nodes connected to the network 200. The caching and routing systems 240-50 may receive the content from the delivery system 230. The content is then cached and filtered on to the receiving systems 255-295. The receiving systems 255-295 ultimately receive the content delivered by the delivery system 230, and may also provide the content to the end-users. The delivery and receiving systems may have several modules coupled to one another. A software module may be coupled to another module to receive variables, parameters, arguments, pointers, etc. and/or to generate or pass results, updated variables, pointes etc. A software module may also be a software driver to interface with the operating system running on the platform. Further, a software module may be a hardware driver to configure, setup, initialize, send and receive data to and from a hardware device.

The network 200 may provide interconnections to the delivery system 230, the receiving systems 255-295, and other nodes and/or systems. The network 200 may correspond to any topologies and protocols. Some of the examples are the Internet, Local Area Network (LAN), Wide Area Network (WAN), broadcast network, etc. The transmission medium may be any suitable communication medium, such as air, cable, electromagnetic, optic, etc.

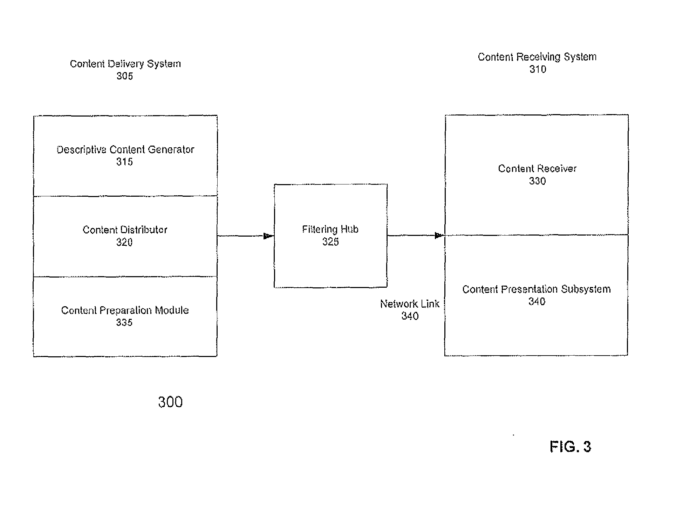

**Figure 3** is a block diagram conceptually illustrating an overview or delivering content from a content delivery system (delivery system) to a content receiving system (receiving system), according to one embodiment of the present invention. As illustrated, the network 300 comprises a delivery system 305 and a receiving system 310. The delivery system 305 may be a website, a content provider (such as a cable operator/provider, a television/radio network, a satellite service provider), an internet service provider (ISP), or any system that downloads, personalizes, packages, delivers or broadcasts content to other systems and/or nodes. The delivery system 305 may comprise one or more servers, computer systems, or platforms with appropriate hardware and software to generate and prepare the content to be delivered.

According to one embodiment, the delivery system 305 may include a descriptive content generator 315. The descriptive content generator 315 generates and/or packages the descriptive content by associating metadata vocabulary or content descriptors with the content. The content descriptors or vocabulary are obtained from a metadata dictionary, which, according to one embodiment, may be included in the delivery system 305. The delivery system 305 may comprise a content preparation module 335 for preparing a content bit stream based on aggregated subscription information from content receiving systems 310. The delivery system 305 may also include a content distributor 320 for distributing the content bit stream to appropriate filtering hubs 325 for further filtering, pruning, and forwarding. According to one embodiment, the content distributor 320 may include the content preparation module 335. The filtering hubs 325 knowing the individual users' profiles prune and filter the content stream into appropriate content streams before downstreaming the content streams to the receiving system 310.

The receiving system 310 may receive the content streams delivered by the delivery system. The receiving system 310 may be similar to the delivery system 305 and may include a server, a computer system, and a platform. The receiving system 310 may include content receivers (receivers) 330 to perform the receiving function. The receiving system 310 may also include a content presentation subsystem 340 to present the content to the users via an interface to the users, so that the users may access the corresponding content streams efficiently and intelligently. The interface may comprise a multimedia device, such as a television, a computer, a handheld device, or any other system that may receive, provide and/or display the content. The receiving system 310 may comprise an antenna (e.g., rabbit ears, satellite dish, etc.). The receiving system 310 may have different levels of intelligence, as desired, such as intelligence to know how to connect and receive the content (e.g., tune to a particular channel to receive a corresponding predetermined broadcast transmission) and to have the intelligence to receive and use a schedule of broadcast (e.g., to use a conceptual TV guide of sorts).

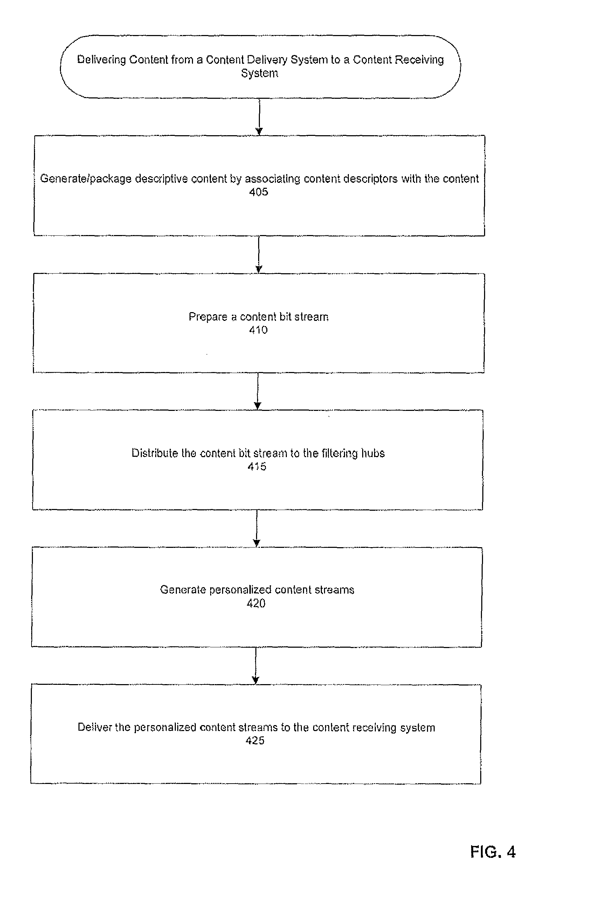

**Figure 4** is a flow diagram conceptually illustrating content delivery, according to one embodiment of the present invention. First, a descriptive content generator may associate content descriptors with the content for generating and/or packaging descriptive content in processing block 405. According to one embodiment, the descriptive content generator may receive the content from various content sources. Using the descriptive content, a content bit stream may then be prepared based on a collective subscription information by a content preparation module in processing block 410. The collective subscription information may include content preferences and content ratings as provided by users on a collective basis. Such collective subscription information may serve as a much more accurate way of determining popularity of a program, in comparison to relying on a general survey, such as Neilson Rating.

The content bit stream may then be distributed by a content distributor to the respective filtering hubs in processing block 415. The filtering hubs may then compare the content in the content bit stream with each of the user profiles for determining the relevance of the data. Such comparison may include filtering and pruning of the content bit stream into personalized content streams corresponding to each of the user profiles in processing block 420. The personalized content streams are then delivered by the filtering hubs to various content receivers of the content receiving system in processing block 425. The content presentation subsystems may then provide the personalized content streams to each of the corresponding user.

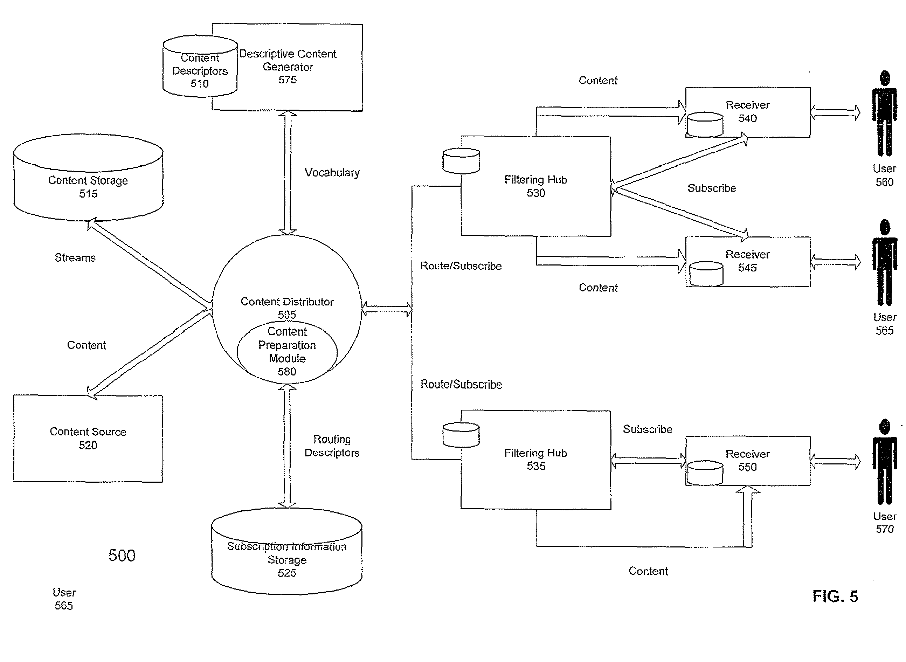

**Figure 5** is a block diagram conceptually illustrating content delivery in a hierarchy of network nodes using a content-based caching and forwarding scheme, according to one embodiment of the present invention. As illustrated, the network 500 comprises a content distributor 505 for distributing the content, filtering hubs 530-35 for caching and filtering the content, and receivers 540-50 for receiving the content.

According to one embodiment, the content distributor 505 may comprise any system or type of content provider, such as a television/radio network, e.g., ABC or NBC, which may transmit content bit stream to various local broadcasters, such as KABC or KNBC, serving as network nodes, such as the filtering hubs 530-35. The content distributor 505 may be a satellite service provider, such as Dish Network or DirecTV, for distributing the content along the network 500 via a satellite system. Further, the content distributor may include a cable provider or Multiple System Operator (MSO) for distributing the content to various network nodes in a cable network. Any combination of content distributors is contemplated. The content distributor 505 may include an Internet Service Provider (ISP), or any other system or provider that downloads the content, prepares and/or packages the content, and delivers and/or broadcasts the content.

According to one embodiment, the content distributor 505 may have access to a metadata dictionary 510 comprising metadata vocabulary (vocabulary) or content descriptors (descriptors). The metadata dictionary 510 may comprise common vocabulary so that it may be understood throughout the network 500. The vocabulary 510 may include terms, phrases, or descriptive paragraphs for describing content. Further, the metadata dictionary 510 may be periodically updated, whenever necessary, with new and/or amended vocabulary. The content distributor 505 may provide the most recent version of the metadata dictionary 510 to all the network nodes, including the filtering hubs 530-35 and receivers 540-550. This may create and sustain uniformity and common understanding of the vocabulary 510, so that the (descriptive) content, subscription information, and user profiles may be fully and correctly understood by all the nodes in the network 500.

Metadata vocabulary or content descriptors may comprise content or media descriptor tags that may characterize a logical grouping of content, also known as packages, so that the content may be used efficiently and intelligently within a given network. A package may include elements or content, such as HyperText Markup Language (HTML) pages, MP3 files, QuickTime movies, video clips, audio clips, and any other suitable content. The package may be independent of the network 500 and transmission mechanism and policies. Further, the package may be represented with a unique identifier and markup language data.

According to one embodiment, the vocabulary or descriptors 510 may be associated with the content thereby attaching description to the content, and therefore, generating and/or packaging descriptive content. A descriptive content generator 575 may attach descriptors 510 to the content, received from a content source 520, for providing attributes and characteristics, such as, but not limited to, type of the content, relevance of the content, content transmission time, the method of transmission. Typically, the descriptors 510 will be separate from the actual portion of the content that is being distributed, although other embodiments are contemplated, such as those where the descriptive content is sampled, from within the presented content. For example, the descriptive content may indicate content type (e.g., movie, sitcom, mini-series, news, music, sports), content category (e.g., baseball, comedy, action, science fiction, horror, jazz, blues), content subject matter (e.g., Los Angeles Dodgers, economics, politics, travel), and other information.

According to one embodiment, the content source 520 is linked with the content distributor 505. The content source 520 may include various content sources that provide the content to be distributed by the content distributor 505. The content sources 520 may include any type of content source that can provide content, such as websites, multimedia devices, television/radio networks, cable operators/providers, and satellite server providers. The content received from content sources 520 may, therefore, include, web content, re-purposed web content, produced content, and external content. For example, the web content may include websites and files retrieved from a website; the re-purposed content may include previously retrieved websites and files; the produced content may include content that has been created, generated, composed, or produced for delivery; and, the external content may include any other external content produced and/or stored elsewhere.

According to one embodiment, the content may be of any form desired for a particular implementation, and is to be interpreted broadly. For example, the content may be computer software, multimedia content, e.g., various types of programs, movies, videos, videos on demand, video games, audio, MP3 audio, and other types of content, such as structured data. The content may have a digital format, and digital processing may be used on the content including storage, electronic manipulation, perfect copying, compression, transmission, and others. For example, an identical copy of the digital content may be created and a bit-wise comparison of the original and the copy may be used to verify that the two are identical.

The content may be in an electronically accessible format. Typically, the content may exist as a computer file having a particular file format that is compatible, standard, or efficient for the type of content and will be stored in a memory. For example, in case of an audio content, the file format may be an MP3 format, and the content may be stored in a memory representing an audio library. However, other embodiments are contemplated. For example, according to one embodiment, the digital content may exist as a stream of digital data. The stream of digital data may be provided by a digital data generating source or device (e.g., a digital camera/recorder), may be provided by an electronically connected source or provider (e.g., a news feed or a stock ticker), or may be provided by another functionally connected entity.

According to one embodiment, the content distributor 505 may have access to or may include or may be coupled to a content storage 515 and a subscription information storage 525. The content storage 515 may contain and store (a master copy of) all the content received from the content sources 520, and at various levels within the network 500. The content distributor 505 may access the content storage 515 for accessing any piece of content at any time. The content distributor 505 may also periodically, or when necessary, receive the content from the content sources 520. Further, all the subscription information received from the users 560-70 may be contained and stored in the subscription information storage 525. As with the content, the content distributor 505 may also access all the subscription information provided by the users, and received/collected by and within the network 500. According to one embodiment, the subscription information may include users' 560-70 requests for certain content, their interest-level in relations to the requested content, date and/or time for receiving such and other content, and channel information. The subscription information may also include the users' 560-70 demographic information, geographic information, and other related, needed, and suitable information.

The filtering hubs 530-535 may aggregate the individual subscription information received from downstream network nodes and present them as subscriptions to upstream nodes until the content distributor 505 is reached. According to one embodiment, the content distributor 505 may also include or be coupled to a content preparation module 580 for preparing an aggregated content bit stream based on the collective subscription information, The content preparation module 580 may match the content and the collective subscription information to form an aggregated content bit stream for all the network nodes. By relying on the subscription information, or in other words, by using a content-based scheme, the available bandwidth may be maximized. Subscription information may serve as a more accurate form of a rating survey, such as Nielson Rating, which indicates the users' 530-570 interest-level. The available bandwidth may be allocated to various content based on the users' 530-570 interest-level in content.

According to one embodiment, the users 560-70, including viewers and/or listeners, may provide subscription information by accessing their respective receivers 540-550. For example, a user 560-70 may access his/her receiver via a remote control and/or keyboard, or via any other device and/or voice/action sensor, to provide the subscription information. According to one embodiment of the present invention, a user 560-70 may be of any form of user desired for a particular implementation, and is to be interpreted broadly. For example, a user may be an individual in a household, an individual set-top box may represent a user, a community of users based on households, head-ends, cable systems, zip codes, or other geographic locations, and users 560-70 may choose to join a community because of the content they may receive.

According to one embodiment, a receiver 540-50 may be part of a content receiving system (receiving system) to receive the content, and may serve as a network node. Depending on a particular implementation, according to one embodiment, the receiver 540-50 may not include content presentation capability or a content providing sub-system (e.g., a digital television) for presenting the (digital) content in a human consumable format (e.g., video presented on a display device). The receiving system, in such a case, may present the content to a separate content presentation system in a form that is functionally, electrically, and/or physically coupled with the receiving system that presents the content to the users 560-70. Alternatively, the receiver 540-50 may include content presentation capability to directly present the content to the users 575. For example, the receiver 540-50 may include a digital television, a personal video recorder, a stereo, an MP3 player, a CD ROM burner, or any other content presentation/providing sub-system.

Typically, the receiver 540-50 may include a conventional component, such as a set-top box or television. After proper installation, for example, the user 560-70 may use the set-top box to tune into a link and receive the content based on the user profile, which may be stored in the set-top box and/or at other network nodes, such as, individually, at the filtering hubs 530-35 and/or, collectively, at the subscription information storage 525.

According to one embodiment, a receiver 540-50 may be interfaced to receive a content containing signal, a decoder to decode the signal, a memory to store the content, and a processor to execute instructions, such as instructions to determine that the content has been received. For example, without limitation, the receiver 540-50, the decoder, the memory, the processor, and/or the instructions may be included in a computer system, a personal computer, a digital television having a memory and a processor, a set-top box, a personal video recorder, a sound system having a memory and a processor, or other systems. The receiving system may comprise an antenna (e.g,, rabbit ears, satellite dish, etc.). The receiving system may have different levels of intelligence, as desired, such as intelligence to know how to connect and receive the content (e.g., tune to a particular channel to receive a corresponding predetermined broadcast transmission) and to have the intelligence to receive and use a schedule of broadcast (e.g., to use a conceptual TV guide of sorts).

According to one embodiment, the receivers 540-50 may also function as caching devices to cache the content, subscription information, user profiles comprising the subscription information, or any other information. Further, the receivers 540-50 may work as filtering devices in addition to the filtering hubs 530-35. In other words, the receivers 540-50 may perform the filtering function of the filtering hubs 530-35, even when the receivers 540-50 and the filtering hubs 530-35 are separate, both logically and physically. According to one embodiment, any of the network nodes may perform the filtering function, perhaps, at a different level within the network 500, from the filtering function performed by the filtering hubs 530-35. Furthermore, the receivers 540-50 and filtering hubs 530-35 may be physically and/or logically, partially or fully, integrated or segregated.

According to one embodiment, the filtering hubs 530-35 may function as caching, filtering, and forwarding devices. For example, in case of a cable provider functioning as a content distributor 505, a head-end may serve as a filtering hub 530-535. The filtering hubs 530-35 may filter/prune and/or divide the collective content bit stream received from the content distributor 505 into personalized content bit streams based on the user profiles comprising the individual subscription information received from the users 560-70. The filtering hubs 530-35 may then forward the personalized content bit streams to the corresponding users 560-70 via the corresponding receivers 540-50. Based on the subscription information received from the users 560-70, the filtering hubs 530-35 may generate individual user profiles corresponding to each user 560-70, and may cache such information for future use. When generating personalized content streams, the filtering hubs 530-35 may maximize the available bandwidth by appropriating bandwidth according to the user profiles.

Typically, a user profile may comprise subscription information as provided by the user 560-70. A user profile may correspond to a single user 560-70, a family profile may correspond to a family of users including the user 560-70, a device profile may correspond to a device associated with the user 560-70, a business profile may correspond to a business or business group that includes the user 560-70, a demographic profile may correspond to a demographic segment (e.g., the elderly, a particular race, a particular religion) that includes the user 560-70, or a geographic profile corresponding to a geographic location (e.g., downtown area, Portland) associated with the user 560-70. Thus, the profile may be a singular user profile or a community user profile. Further, other types of profiles are contemplated.

According to one embodiment, a user profile may include user information (e.g., characteristics and attributes of the user 560-70, billing information, address information), content preference data that indicates types of content preferred by the user 560-70 (e.g., sports), characteristics of content (e.g., major sporting event) that the user 560-70 prefers, content rating that indicates the user's 560-70 interest-level regarding certain content, timing preference information that indicates when the user prefers to receive or consume the content, observational profile information based on automated observation and profile recordation of content consumption behavior of the user 560-70 and/or direct contribution of profile data by the user 560-70, and any other information that describes when and how the user prefers to receive the content. According to one embodiment, the profile may contain information or data operable to differentiate or identify desired or preferred content from undesired or un-preferred content.

According to one embodiment, as mentioned above, the profile may include not only user preferences, but also content rating. In other words, the users 560-70 may enter information indicating their interest-level regarding the content using a content rating system, which may be predetermined. The content rating system may be implemented in a number of ways, and should be interpreted broadly. For example, a number of stars (such as one through four), numbers (such as 1 through 10), letters (such as A through J), symbols (such as bulls, bears, thumbs up and down), or words (such as excellent, poor) may be used, or any combination of such may be used, to rate the content. For example, the user 575 may rate action movies at 3 stars out of four stars, but rate action movies with Jackie Chen 31/2 stars out of 4 stars. Such information may then be used by the corresponding filtering hub 534-35 and/or the receivers 540-550 to populate the user profiles, and provide the personalized content stream.

According to one embodiment, conventional technologies may be used, together with any desirable modifications that will be apparent to those skilled in the art. For example, the network 500 may comprise a conventional processor to execute instructions, a conventional memory to store content, a conventional encoder to encode content, a conventional transmitter to transmit a content containing signal, a conventional receiver to receive the content containing signal, and a conventional decoder to decode content. Without limitation, the content may be converted to an MPEG format, transmitted via a tower antenna over an atmospheric communication medium, received by an antenna, and converted from the MPEG format to an uncompressed useable format.

According to one embodiment, the network 500 may comprise a content delivery/transmission system (delivery system) to deliver the content, and a content receiving/reception system (receiving system) to receive the content. The term "transmission" and "delivery" and related terms may be used broadly to refer to moving data, frequently digital data, from one place or system to another and the term "reception" and "receiving" and related terms may be used broadly to refer to accepting the moved data. Typically, delivery may include generating and submitting a content-containing machine-accessible signal, and receiving may include accepting and interpreting the content-containing machine-accessible signal. For example, a transmission tower may broadcast an electromagnetic radiation content-containing signal simultaneously to multiple receiving antennas (e.g., rabbit ear antennas) operable to accept the signal. Alternatively, rather than broadcasting, the signal may be multicast or narrowcast to specific recipients, similarly to the way cable television is delivered to cable subscribers.

According to one embodiment, the delivery system may deliver the content over a substantially one-way communication link, in which the predominant or only delivery is from the delivery system to the receiving system. According to one embodiment, the link may be bi-directional, although typically, the link will be a substantially non-client-server link. A client-server link would be typified by the receiving system issuing a request for the content, and the delivery system then issuing the content in response, similarly to the way that a web page may be received using the Internet. In contrast, in a non-client-server link, the delivery system may provide the content without the request. That is, the delivery system may deliver the content to the receiving system, and typically a plurality of other receiving systems simultaneously, without receiving a specific request that is processed and responded to or supplied.

According to one embodiment, the link may be a link that is shared by multiple receiving systems such as the described receiving system. The link may be based on a number of technologies, including satellite and dish, fiber optic, coaxial cable, and others. For example, the link may be a one way broadcast pipe in which the content is simultaneously broadcast to all of the receivers 560-70 connected with a network (e.g., having an antenna like rabbit ears or a satellite dish to receive the transmission) or narrowcast to a select group of receivers (e.g., having authorization to receive the transmission). For example, the link may carry a digital TV channel with a bandwidth of 19.39 megabits per second and may be partitioned among multiple channels such as four channels that each carry 4.85 megabits per second, which may carry either content or retransmitted/re-delivered content.

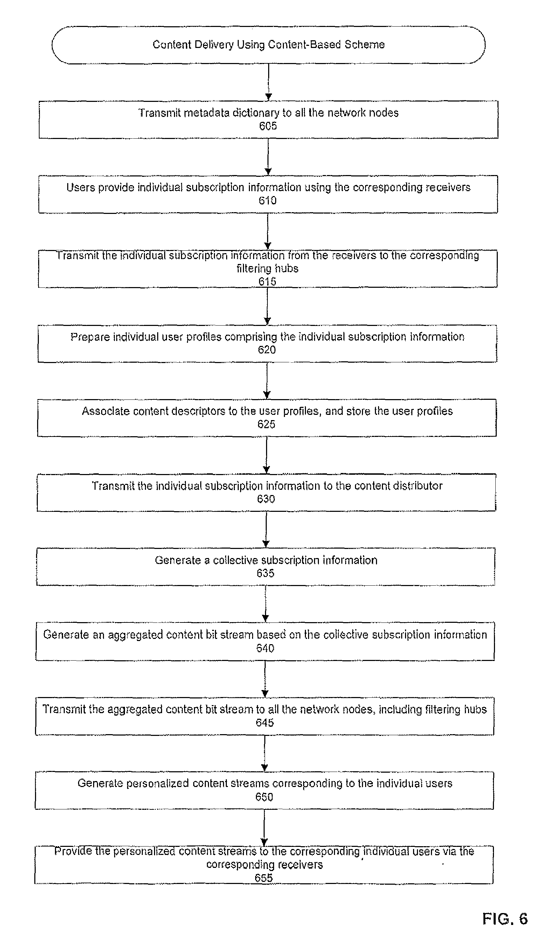

**Figure 6** is a flow diagram conceptually illustrating content delivery processing, according to one embodiment of the present invention. First, a content distributor having access to a metadata dictionary may prepare and provide an updated metadata dictionary to all the network nodes in the network in processing block 605. This may keep the network nodes updated on what metadata vocabulary to use in order to describe the subscription information received from the users. The users may provide subscription information by accessing the corresponding receivers in processing block 610. The receivers may provide the subscription information to the corresponding filtering hubs in processing block 615. The filtering hubs may aggregate the subscription information, and generate individual user profiles based on the subscription information in processing block 620. The filtering hubs may then associate content descriptors to the user profiles in processing block 625, and cache the user profiles for future comparison and filtering of the content. The filtering hubs may transmit the subscription information upstream along the network nodes to the content distributor in processing block 630.

The content distributor may aggregate the individual subscription information received from various network nodes, such as downstream filtering hubs 530-535 and/or receivers 540-550, to prepare a collective subscription, which is stored for future references in regards to content delivery in processing block 635. The content preparation module may then generate an aggregated content bit stream based on the collective subscription information in processing block 640. According to one embodiment, the content distributor may receive the content from one or more content sources. The content distributor may also simply access the master copy of the content stored in the content storage. Further, according to one embodiment, the content distributor may comprise the content preparation module for aggregating the content and preparing the aggregated content bit stream. The content distributor may then forward the aggregated content stream along to the next tier of network nodes, including to the filtering hubs, in processing block 645. After receiving the aggregated content stream, the filtering hubs may generate personalized content streams corresponding to the individual users by filtering and pruning the aggregated content stream according to the comparison of the aggregated content stream based on the collected subscription information with the individual user profiles based on the individual subscription information in processing block 650. The filtering hubs may provide the personalized content streams to the corresponding users via receivers associated with the users in processing block 655.

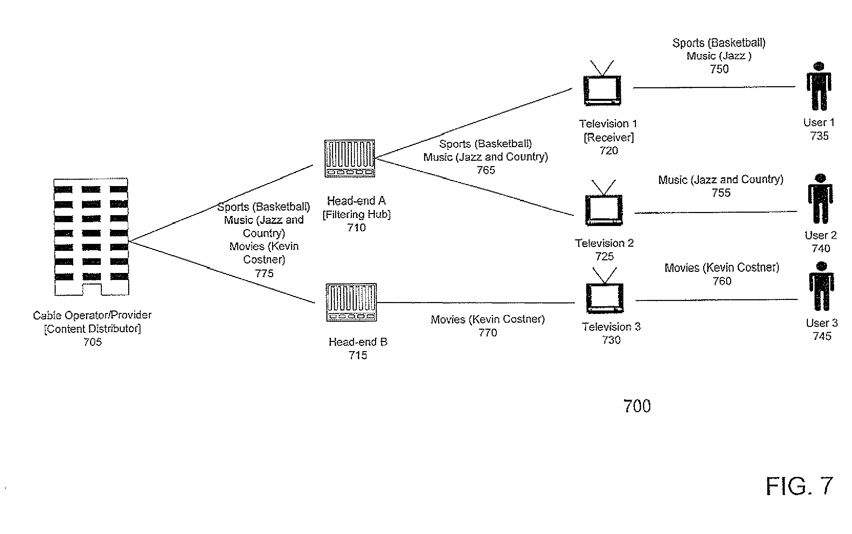

**Figure 7** is a block diagram conceptually illustrating a cable television network using content-based scheme for content delivery, according to one embodiment of the present invention. As illustrated, a cable operator/provider 705, such as AT&T or Comcast Cable, may be a content distributor 705. The cable operator/provider 705 having access to metadata dictionary may provide the metadata vocabulary or content descriptors to the entire network for consistency and uniformity in using the metadata vocabulary. Further, the content descriptors are used for enabling a content-based caching and forwarding content delivery system as opposed to an address-based content delivery system. Head-ends 710-715 are illustrated as filtering hubs 710-715, and televisions (or television set-top boxes), as illustrated, may function as receivers 720-730.

According to one embodiment, the users 735-45 may provide individual subscription information 750-760 using their televisions or television set-top boxes 720-30. The receivers 720-30 may provide the individual subscription information 750-60 received from each of the users 735-45 to the corresponding head-ends 720-30. For example, user 1 735 may request the categories of sports and music 750, specifically, basketball and jazz. User 2 740 may request only music 735 (jazz and country), while user 3 745 may request movies 760 starring Kevin Costner. The receivers 720-730 may generate individual user profiles for each of the users 735-745, and save the user profiles for future use. However, the receivers 720-730 may also forward the subscription information 750-760 to the head-ends 710-715.

Head-end A 710 receives the subscription information 765 from receiver 1 and 2 720-725, while head-end B 715 receives subscription information 770 from receiver 3 730. According to one embodiment, the head-ends 720-730 may also generate individual user profiles for future use. The head-ends 720-730 may generate aggregated subscription 775 based on the individual subscription information 765-770 received from the receivers 720-730. The aggregated subscription information 775 may be forwarded to the content distributor 705 for generating content bit stream based on the aggregated subscription information 775. The head-ends 710-715 may also save the subscription information 775 for future use in regards to future content delivery. Further, the head-ends 710-15 may associate content descriptors with the subscription information 775 based on the metadata dictionary forwarded by the content distributor 705.

According to one embodiment, the content distributor 705 may use the aggregated subscription information 775 to determine the users' 735-45 preferences, needs, and interest-levels regarding the content on a collective basis. The cable operator/provider 705 may also associate content descriptors to the aggregated subscription information 775, or may simply translate the content descriptors already assigned by the head-ends 710-715. Once the users' 735-45 preferences, needs, and interest-levels are determined, the content distributor 705 may accordingly distribute an aggregated content bit stream for maximizing the bandwidth use. For example, the content distributor 705 may allocate 50% of the bandwidth to music, and 25% of the bandwidth each to sports and movies. The content distributor 705 may further breakdown the bandwidth within a category. For example, 67% of the bandwidth assigned to music may be further assigned to jazz, and 33% may be assigned to country.

According to one embodiment, by using the content-based content delivery system, the network 700 may optimize its resources, by at least maximizing its bandwidth. Further, due to the content-based scheme, the content delivery system is dynamic in nature, and is therefore, easily generated and allows for easy tracking of content pieces before, during, and after the distribution. The individual user subscription information may be used to time-shift some of the content to specific segments of the network for further optimization of bandwidth and broadcasting schedule. For example, according to one embodiment, the time-shifting of the content may be performed by generating timeslots according to the subscription information, and therefore, by avoiding the simultaneous broadcast of all the content to all the users.

The aggregated content bit stream may then be distributed by the content distributor 705 to the network 700 based on the aggregated subscription information 775. The head-ends 710-715 may filter, prune, and divide the aggregated content bit stream into several personalized content bit streams by comparing the aggregated content bit stream to the individual user profiles generated by the receivers 720-730. The personalized bit streams may then be transmitted to the users 735-745 via the corresponding televisions 720-730.

### Further embodiments of the invention

According to an embodiment of the invention there is provided a method comprising receiving content from one or more content sources; distributing metadata dictionary to a plurality of network nodes, wherein the metadata dictionary comprises content descriptors; receiving a plurality of subscription information from a plurality of corresponding filtering network nodes of the plurality of network nodes, wherein the plurality of subscription information is provided by a plurality of corresponding users via a plurality of receiving network nodes of the plurality of network nodes; aggregating the plurality of subscription information; generating an aggregated content stream based on the aggregated subscription information, wherein the aggregated content stream comprises aggregated content; and distributing the aggregated content stream to the plurality of filtering network nodes.

Preferably, the method further comprises: generating a plurality of user profiles comprising the plurality of subscription information; associating the content descriptors with the plurality of user profiles; saving the user profiles; generating a plurality of personalized content streams based on the plurality of user profiles by dividing the aggregated content stream into the plurality of personalized content streams; and providing the plurality of personalized content streams to the plurality of receiving network nodes.

Preferably, the generating the plurality of personalized content streams comprises filtering the aggregated content stream by comparing the aggregated content stream with the plurality of user profiles.

Preferably, the preparing the aggregated content stream based on the aggregated subscription information further comprises allocating bandwidth based on the aggregated subscription information to maximize the bandwidth. Preferably the method further comprises providing the plurality of personalized content streams to the plurality of corresponding users.

According to another embodiment of the invention there is provided a method comprising receiving a plurality of subscription information from a plurality of receiving network nodes of a plurality of network nodes; generating a plurality of user profiles comprising the plurality of subscription information; associating content descriptors with the plurality of user profiles; saving the user profiles; generating a plurality of personalized content streams based on the plurality of user profiles by dividing an aggregated content stream into the plurality of personalized content streams; and providing the plurality of personalized content streams to the plurality of receiving network nodes.

Preferably, the method further comprises receiving the plurality of subscription information from the plurality of corresponding users; forwarding the plurality of subscription information upstream to a plurality of filtering network nodes of the plurality of network nodes; receiving the plurality of personalized content streams from the plurality of filtering network nodes; and providing the plurality of personalized content streams to the plurality of corresponding users, wherein the plurality of personalized content streams comprises content.

Preferably, the method further comprises generating the plurality of user profiles based on the plurality of subscription information; saving the plurality of user profiles.

Preferably, the method further comprises displaying the content. Preferably the plurality of subscription information comprises a plurality of user preference data, wherein the plurality of user preference data comprises content preferred by the plurality of users.

Preferably, the subscription information comprises a plurality of content rating data, wherein the plurality of content rating data indicates interest-level of the plurality of the users relating to the content.

Preferably, the plurality of users comprises the following: a household and a community.

Preferably, the community comprises the plurality of users based on the following: demographics, geographic locations, and head-ends.

Preferably, the method further comprises distributing a metadata dictionary comprising the content descriptors; dynamically updating the metadata dictionary; and storing the metadata dictionary.

Preferably, the method further comprises receiving the content from a plurality of content sources, wherein the content sources comprise sources of web content, re-purposed web content, produced content, and external content; and storing the content.

According to another embodiment of the invention there is provided a content delivery system comprising a content distributor to distribute downstream an aggregated content stream to a plurality of filtering hubs of a network, wherein the aggregated content stream is based on an aggregation a plurality of subscription information received from the plurality of filtering hubs; the plurality of filtering hubs to receive the plurality of subscription information from a plurality of receivers of the network, and filter the aggregated content stream to generate a plurality of personalized content streams based on a plurality of user profiles, wherein the plurality of user profiles is generated based on the plurality of subscription information, and provide the plurality of personalized content streams downstream to the plurality of receivers; and a plurality of receivers to receive the subscription information from a plurality of users, and provide the subscription information upstream to the plurality of the filtering hubs, and provide the plurality of personalized content streams downstream to the plurality of users.

Preferably, the content distributor is further to distribute a metadata dictionary to a plurality of nodes of the network, wherein the metadata dictionary comprises metadata vocabulary.

Preferably, the content distributor is further to receive content from one or more content sources.

Preferably, the content distributor comprises broadcasting networks, local broadcasters, cable providers and operators, satellite service provider, and other content providers.

Preferably, the plurality of filtering hubs comprises head-ends, local broadcasters, local satellite stations, and filtering stations.

Preferably, the plurality of receivers comprises multimedia devices, wherein the multimedia devices comprise content providing sub-system and content receiving sub-system.

Preferably, the content providing sub-system comprises content display system.

Preferably, the plurality of filtering hubs and the plurality of receivers may be logically and/or physically integrated.

According to another embodiment there is provided a machine-readable medium having stored thereon data representing sequences of instructions, the sequences of instructions which, when executed by a processor, cause the processor to receive content from one or more content sources; distribute metadata dictionary to a plurality of network nodes, wherein the metadata dictionary comprises content descriptors; receive a plurality of subscription information from a plurality of corresponding filtering network nodes of the plurality of network nodes, wherein the plurality of subscription information is provided by a plurality of corresponding users via a plurality of receiving network nodes of the plurality of network nodes; aggregate the plurality of subscription information; generate an aggregated content stream based on the aggregated subscription information, wherein the aggregated content stream comprises aggregated content; and distribute the aggregated content stream to the plurality of filtering network nodes.

Preferably, the sequences of instructions which, when executed by a processor, further cause the processor to: generate a plurality of user profiles comprising the plurality of subscription information; associate the content descriptors with the plurality of user profiles; save the user profiles; generate a plurality of personalized content streams based on the plurality of user profiles by dividing the aggregated content stream into the plurality of personalized content streams; and provide the plurality of personalized content streams to the plurality of receiving network nodes.

Preferably, generating the plurality of personalized content streams further causes the processor to filter the aggregated content stream by comparing the aggregated content stream with the plurality of user profiles

Preferably, the sequences of instructions which, when executed by a processor, further cause the processor to provide the plurality of personalized content streams to the plurality of corresponding users.

According to another embodiment there is provided a machine-readable medium having stored thereon data representing sequences of instructions, the sequences of instructions which, when executed by a processor, cause the processor to receive a plurality of subscription information from a plurality of receiving network nodes of a plurality of network nodes; generate a plurality of user profiles comprising the plurality of subscription information; associate content descriptors with the plurality of user profiles; save the user profiles; generate a plurality of personalized content streams based on the plurality of user profiles by dividing an aggregated content stream into the plurality of personalized content streams; and provide the plurality of personalized content streams to the plurality of receiving network nodes.

Preferably, the sequences of instructions which, when executed by a processor, further cause the processor to: receive the plurality of subscription information from the plurality of corresponding users; forward the plurality of subscription information upstream to a plurality of filtering network nodes of the plurality of network nodes; receive the plurality of personalized content streams from the plurality of filtering network nodes; and provide the plurality of personalized content streams to the plurality of corresponding users, wherein the plurality of personalized content streams comprises content.

Preferably, the sequences of instructions which, when executed by a processor, further cause the processor to generate the plurality of user profiles based on the plurality of subscription information; save the plurality of user profiles.

## Claims

1. A method comprising:
receiving content;
receiving user feedback about categories of content of interest to a group of users;
receiving information from individual users about content of interest to individual users; and
using a two-stage filtering process to select content, such that in a first stage, remote from a receiver, user feedback is used to collect content categories from said content for said group of users and, during a second phase, at said receiver, filtering nodes are used to select from within said categories, content of interest to a subset of said group of users.

2. The method of claim 1, further comprising:
generating a plurality of user profiles comprising the subscription information;
associating the content descriptors with the plurality of user profiles;
saving the user profiles;
generating a plurality of personalized content streams based on the plurality of user profiles by dividing the aggregated content stream into the plurality of personalized content streams; and
providing the plurality of personalized content streams to the plurality of receiving network nodes.

3. The method of claim 2, wherein the generating the plurality of personalized content streams comprises filtering the aggregated content stream by comparing the aggregated content stream with the plurality of user profiles.

4. The method of claim 1, further comprising providing the plurality of personalized content streams to the plurality of corresponding users.

5. A content delivery system comprising:
a head end to distribute content and to receive user feedback about categories of content of interest to a group of users;
a module to select categories for transmission to a group of users based on said feedback; and
a receiver including a filter to select content from within said categories of interest to a user of said receiver.

6. The content delivery system of claim 5, wherein the content distributor computer system comprises one or more of broadcasting networks, local broadcasters, cable providers and operators, satellite service provider, and other content providers.

7. The content delivery system of claim 5, wherein the plurality of filtering hubs comprises one or more of head-ends, local broadcasters, local satellite stations, and filtering stations.

8. The content delivery system of claim 5, further comprising a plurality of receivers, the plurality of receivers comprising multimedia devices, wherein the multimedia devices comprise one or more of a content providing sub-system and a content receiving sub-system.

9. The content delivery system of claim 8, wherein the content providing sub-system comprises content display computer system.

10. The content delivery system of claim 5, wherein the plurality of filtering hubs and the plurality of receivers are integrated one or more of logically and physically.
